# EUROPEAN PATENT SPECIFICATION

(11) **EP 1 329 045 B1**
(45) Date of publication and mention of the grant of the patent: **08.12.2004**
(21) Application number: 01988988.0
(22) Date of filing: 12.10.2001
(51) Int. Cl.: H04H 1/00

(54) **RENDERING DEVICE AND ARRANGEMENT**
EINRICHTUNG UND ANORDNUNG ZUR WIEDERGABE
DISPOSITIF ET SYSTEME DE RENDU

(30) Priority: 20.10.2000 EP 00203659; 09.02.2001 EP 01200495
(43) Date of publication of application: 23.07.2003
(73) Proprietor: Koninklijke Philips Electronics N.V., 5621 BA Eindhoven (NL)
(72) Inventor: HUIZER, Cornelis, M., NL-5656 AA Eindhoven (NL)
(74) Representative: Groenendaal, Antonius Wilhelmus Maria
(86) International application number: PCT/EP2001/011876
(87) International publication number: WO 2002/035747

(56) References cited:
- WO-A-96/36163

## Description

The invention relates to a rendering device.

The invention further relates to an arrangement for distributing content.

Watermarking, the process of inserting extra information in an input signal such as audio or video, is an important and well-known technique to mark or protect those input signals. A movie can be watermarked so its origin can be identified, or unauthorized copies can be distinguished from the original. Watermarks can be used with still images to locate copies reproduced by unauthorized third parties, by simply downloading images from the information services offered by those third parties and examining the downloaded images for the watermark.

Watermarks can also be used to embed metadata, such as an Internet Uniform Resource Locator (URL), in the input signal, for instance in a movie. A user who views the movie at his personal entertainment station can access the embedded metadata to access, for instance, the World-Wide Web site of the movie. An example is disclosed by WO 96/36163 A.

A content owner can embed audio watermarks in his audio content, or in an audio portion of his audiovisual content. These watermarks preferably contain metadata related to e-commerce, such as a Uniform Resource Identifier. The content owner then arranges for an audio signal representing the audio content to be transmitted, for example by broadcasting it, to a consumer. The consumer can retrieve and use the metadata by using a mobile phone or other mobile device as a receiver for the audio signal, and then detecting the watermark from the received audio signal and processing the metadata comprised therein.

Alternatively to watermark detection in the mobile phone, the watermark detection may be done in a central processing server in the mobile network. The mobile phone in that case is only used to carry the audio from the pickup point to the central processing server.

Using this approach, a content owner and a mobile phone vendor, or the content owner and a mobile phone operator, can work out various watermarking-based e-commerce business models without any involvement of the broadcaster, network operator or the manufacturer of the CE appliance. This provides true disintermediation. The mobile phone operator facilitates the transmission of the watermark or the information comprised therein to an e-commerce system. The mobile phone manufacturer provides the mobile phones which can receive audio signals and detect and/or decode watermarked information therein, but also the software which then distributes the information to the e-commerce system. Both parties may receive a portion of the revenue incurred by the e-commerce system for this.

A disadvantage of the approach outlined above is that audio watermarks are relatively vulnerable to attacks, which are intended to remove the audio watermark. As an example, advanced audio compression systems such as SSC remove the watermark as being redundant information. It is likely that, due to the above-mentioned disintermediation, the broadcast part of this arrangement will not cooperate with the content owner, as no revenue will be shared with the owner of the broadcasting system. It is technically and economically quite feasible to remove the watermark in the broadcast system, e.g. via a combination of compression-decompression using advanced audio compression technology, such as SSC, without compromising the perceptual quality of the audio signal. This will severely hinder any business model that is based on watermarked content being distributed as outlined above.

It is an object of the invention to provide a rendering device which enables enhanced disintermediation in an e-commerce arrangement.

This object is achieved according to the invention in a rendering device comprising receiving means for receiving a content item comprising at least a video portion, in which portion extra information is embedded, decoding means for decoding the extra information from the video portion, embedding means for embedding the extra information in an audio signal, and rendering means for rendering the audio signal. The video portion contains much more information than the audio portion, if any, so it is harder to detect and/or remove any extra information embedded therein. This makes the video portion more suited for the transport of information through an uncooperative distribution channel. This way, the distribution channel operator does not need to receive a portion of the revenue in return for his cooperation.

In an embodiment the extra information is embedded in the video portion by means of a video watermark. This has the advantage that video watermarks are less vulnerable as the amount of data transmitted is an order of magnitude larger than for audio. This makes it less likely that an uncooperative intermediary, such as a broadcaster, can remove it.

In a further embodiment the embedding means are arranged for embedding the extra information in the audio signal by means of an audio watermark. Using an audio watermark at a point where a consumer can receive the signal in which it is embedded has the advantage that it can be picked up easily, for instance by simply aiming a mobile device, such as a mobile phone, at a loudspeaker which emits the watermarked audio signal.

Other advantageous embodiments of the invention are set out in claims 4-6.

It is a further object of the invention to provide an arrangement for distributing a content item which provides enhanced disintermediation.

This object is achieved according to the invention in an arrangement comprising a content provider arranged for embedding extra information in a video portion of the content item and for making the content item with said embedded extra information available for reception by a rendering device according to the invention. The content provider can in this arrangement distribute the extra information via one or more intermediaries such as a distributor, a broadcasting corporation or a network operator. These intermediaries are not able to remove the video watermark by compressing or otherwise modifying the content item. The rendering device, with its transcoding capability in according to the invention, can provide the consumer with a watermarked audio signal containing the extra information, which can be processed easily by the consumer's mobile phone or other device.

The invention further relates to a computer program product.

These and other aspects of the invention will be apparent from and elucidated with reference to the embodiments shown in the drawing, in which:
Fig. 1 schematically shows a first embodiment of the arrangement according to the invention; and
Fig. 2 schematically shows a second embodiment of the arrangement.

Throughout the figures, same reference numerals indicate similar or corresponding features. Some of the features indicated in the drawings are typically implemented in software, and as such represent software entities, such as software modules or objects.

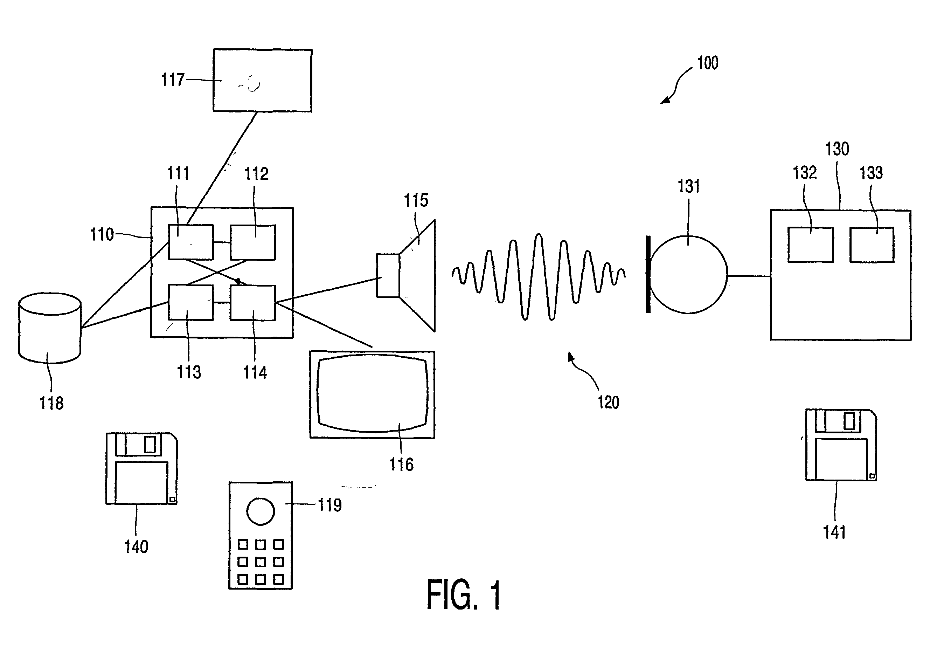

Fig. 1 schematically shows an arrangement 100 comprising a rendering device 110 and a receiving device 130. The rendering device 110 comprises receiving module 111, decoding module 112, embedding module 113, rendering module 114 and output module 115.

The receiving module 111 receives a content item comprising at least a video portion. The content item is for instance a television program, a movie, a video clip accompanying a song, an image or a portion thereof. It is usually received through a network such as the Internet, a satellite feed or a home network from a distributor 117 such as a television broadcasting organization. Alternatively, it can be loaded from local storage 118 which can be a tape or a disk such as a DVD or Video CD. It can also be a hard disk on which it has been previously recorded for later viewing.

Extra information is embedded in the video portion of the content item. The extra information can be anything, but will often be metadata or data related to copy protection. In a preferred embodiment, the content is embedded using a video watermark. It can be watermarked using any video watermarking technique suitable for the type of content that is to be transmitted. The decoding module 112 decodes this extra information from the video portion, preferably by decoding the video watermark. It may be necessary to first obtain a decoding key to locate the watermark in the video portion, depending on the watermarking technique used. The decoding module 112 then feeds the extra information to the embedding module 113.

This extra information is to be communicated to the receiving device 130 together with the content item. In accordance with the invention, the embedding module 113 selects an audio signal to be transmitted to the receiving device 130 and embeds the extra information into the audio signal. In a preferred embodiment, the audio signal is an audio portion of the content item. Alternatively, it can be loaded from storage medium 118, for instance as a prerecorded message or sound. Preferably, the extra information is embedded using an audio watermark. Any kind of watermarking or other steganographic technique suitable for the audio signal can be used.

The extra information may need to be embedded in a synchronized fashion with the activity in the video portion, so that they will be synchronized with this activity as well. In other situations, the extra information may need to be processed or used at particular points in time. In those situations, the expected rendering times of the video portion should be known so that the extra information can be embedded at the corresponding locations in the audio signal.

When the content item does not comprise an audio portion, or when the audio portion is not used for whatever reason to embed the extra information into, an alternative audio signal is used. This audio signal can, as mentioned, be loaded from storage medium 118. The rendering of this audio signal may be confusing to a user. For example, when he is viewing a series of still images he will most likely not expect an audio message to be played out. When an alternative audio signal is used, it needs to be mixed with any audio signal that is present in the content item. This may also cause unwanted distortions.

In cases such as these, it is preferred to provide the user with an unobtrusive indication that extra information is available, for example with a visual icon in one of the comers of the visual output device 116. The user can then choose whether to access the extra information or not by using an input device 119. For instance, he can click on the icon, or press a special button on his remote control or give a speech command.

In response to the user's action using input device 119, the embedding module 113 is activated and the watermarked audio signal 120 is generated and fed to the rendering module 114, which outputs it using audio output module 115. Alternatively, the embedding module 113 can generate the watermarked audio signal 120 in advance and only feed it to the rendering module 114 in response to the user's action.

The watermarked audio signal 120 is then fed to rendering module 114, which outputs it using audio output module 115 into the acoustical domain. The rendering module 114 also outputs the video portion of the content using video output module 116, if necessary synchronized with the audio signal.

The receiving device 130 comprises receiving module 131, decoding module 132 and executing module 133. The receiving module 131 receives the watermarked audio signal 120 and feeds it to the decoding module 132. The receiving module 131 can be for instance a microphone, a camera or a light sensitive sensor of some kind.

The decoding module 132 processes the watermarked audio signal 120 to obtain the extra information. Typically receiving and decoding comprises converting the watermarked audio signal 120 back into a representation similar to the one used in the rendering device 110. The extra information is then fed to the executing module 133.

The executing module 133 executes some action based on the extra information. In one embodiment the extra information comprises an Internet URL, and the executing module 133 then automatically retrieves the associated webpage from the Internet. In another embodiment the extra information is related to a product. The executing module 133 then executes an application which allows its user to buy the product from an e-commerce system. Other actions are of course also possible.

The rendering device 110 can be realized as a computer program product 140 being arranged for causing a processor to execute the steps described above. The computer program product 140 enables a programmable device when executing said computer program product to function as the rendering device 110. Similarly, the receiving device 130 can be realized as a computer program product 141 enabling a programmable device when executing said computer program product to function as the receiving device 130.

The above description gives a general overview of the functionality of distributing watermarked content. Various ways are possible to realize the rendering device 110 and the receiving device 130, with different advantages and possibilities. The arrangement 100 can be used to realize any present or future business model or application using the watermark as a means of reaching the consumer. This will be discussed below.

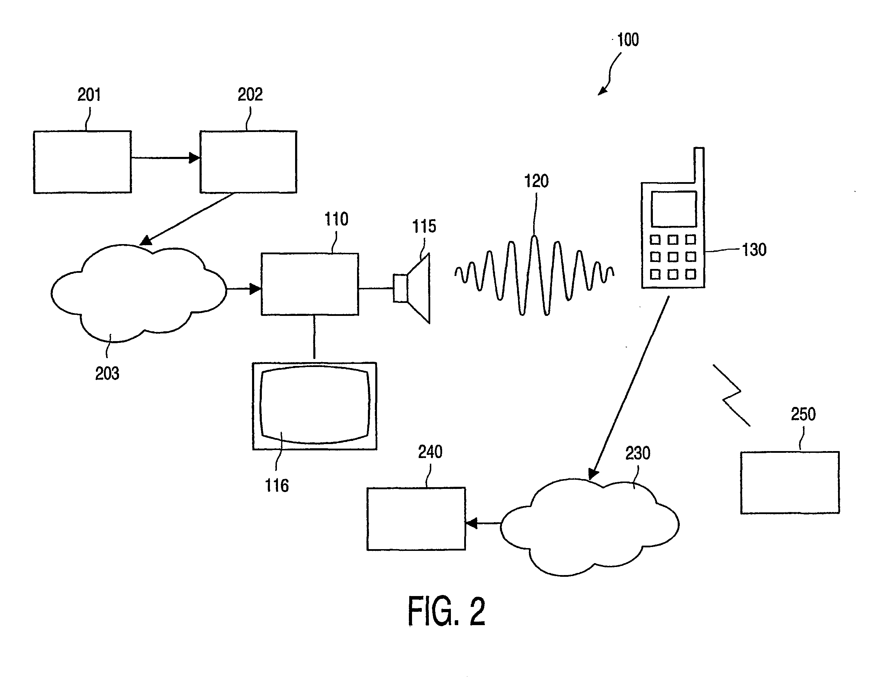

Figure 2 shows a second embodiment of the arrangement 100 according to the invention. There is a content provider 201, which has some piece of content that needs to be transmitted to a consumer. The content preferably comprises at least a video portion. The content provider 201 embeds extra information in the video portion by means of watermarking. The extra information can be anything, but will often be metadata or data related to copy protection. The content can be watermarked using any watermarking technique suitable for the type of content that is to be transmitted.

The content owner 201 then transmits the watermarked content to a distributing entity 202. The distributing entity 202 is responsible for distributing the content to the intended receivers, which may be anyone with a suitable rendering device. The distributing entity 202 may optionally distribute the content only to subscribers or receivers who pay using a prepay card or other mechanism.

To reach the intended receivers, the distributing entity 202 makes use of facilities offered by various network operators. Using a network operator, the content is transported over distribution network 203 to the rendering device 110, which can be realized as a set-top box at a consumer's house, but can also be a public address system in any location. The rendering device 110 is arranged to play out the content over audio output module 115 and video output module 116. In accordance with the invention and as described with reference to Figure 1, the rendering device 110 outputs watermarked audio signal 120 to the acoustical domain.

The consumer can choose to simply listen to the watermarked audio signal 120, but he may also want to make use of the extra information embedded in it. In that case, he simply has to use his receiving device 130, preferably realized as a mobile or portable device such as a mobile phone, to receive the watermarked audio signal 120.

The receiving device 130 decodes the watermark from the received watermarked audio signal 120 and processes the extra information contained therein. This extra information is then used to realize a business application, as will become apparent below. In one embodiment, only the receiving device 130 is necessary at the consumer's end to realize the business model or application, since it contains all the necessary modules for decoding and processing. The receiving device 130 may optionally be assisted in detecting, decoding and/or processing by a supporting server 250, which can be in the mobile network 230 but may also be located in the user's home or at some other place.

The receiving device 130 can communicate with an e-commerce server 240 using a network 230 of some kind. For instance, if the receiving device 130 is a mobile phone, the network 230 is the mobile network coupled to a network such as the Internet, allowing the mobile phone to connect to servers such as server 240 on the Internet.

Using this arrangement, the content owner 201 can work out and realize any present or future business model or application using the watermark as a means of reaching the consumer. The distributing entity 202 and the operator of network 203 are not required to do anything special. Thus, the arrangement according to the invention provides true disintermediation - it is no longer necessary to involve a distributor and a network operator to reach a consumer.

As an example business model, consider a content owner 201 who wishes to promote a movie. To this end, he produces a trailer, which is to be transmitted to consumers. Normally, a consumer who views the trailer and decides he wants to go see the movie then needs to access some information service to find out which cinemas show the movie and at which times. The distributor 202 may provide this information to the consumer, for instance as a Teletext page listing all available movies and starting times, or as a mention in a local television show or advertisement. However, the distributor 202 will most likely charge a fee for making this information available using his Teletext channel.

In accordance with the invention, the content owner 201 can embed the information in the video portion of the trailer. The distributor 202 then distributes the trailer as usual, and when it is shown by the rendering device 110, the information is transcoded into the audio portion of the trailer and output by audio output module 115, which in this embodiment is a loudspeaker. The consumer use his receiving device 130, here a mobile phone, to pick up the audio portion output by the loudspeaker 115. The mobile phone 130 then detects the watermark and decodes the information embedded therein. It can then show an overview of cinemas and starting times on its display. Preferably, the mobile phone 130 knows which city the consumer lives in and filters the information prior to displaying it.

Alternatively, the extra information comprises a Uniform Resource Identifier (URI) identifying a webpage on the Internet, which shows the overview of cinemas and starting times. The mobile phone 130 then detects the watermark, decodes the URL therefrom and retrieves the webpage, for instance using the Wireless Application Protocol (WAP). By browsing the webpage on his mobile phone 130, the consumer can then choose the right cinema and time.

Another example business model that can be realized using the invention is a scheme to promote the viewing of commercials. The content owner 201 can produce commercials with embedded watermarks which are to be presented to consumers. The extra information embedded in those watermarks is in this business model related to a prize contest of some sort. Consumers can then use their mobile phone 130 or other suitably equipped portable device to pick up the extra information to see if they have won a prize. The prize can be represented by an electronic code, which must be entered in an information system to determine if the consumer has won a prize.

The content owner 201 now embeds this electronic code in one particular commercial, to be broadcast at one particular time, and announces this fact without mentioning the exact time and place. Consumers who want to win the prize now have to watch all the commercials from this content owner 201 to try to detect the watermark with the electronic code. This greatly increases the brand exposure for the content owner 201 and stimulates the viewing of commercials in general.

The mobile phone operator can cooperate with the system and e.g. provide his payment system to handle the transaction, or provide subscriber information to the e-commerce system 240 when the extra information is used in a sale, all in return for a part of the generated revenue of course. If the operator does not cooperate, it will be very hard for him to block the transaction, as this would require processing all responding calls.

## Claims

1. A rendering device (110) comprising receiving means (111) for receiving a content item comprising at least a video portion, in which portion extra information is embedded, decoding means (112) for decoding the extra information from the video portion, embedding means (113) for embedding the extra information in an audio signal (120), and rendering means (114) for rendering the audio signal (120).

2. A rendering device (110) as claimed in claim 1, wherein the decoding means (112) an adapted to decode a video watermark used to embed the extra information in the video portion.

3. A rendering device (110) as claimed in claim 1, wherein the embedding means (113) are adapted to embed the extra information in the audio signal (120) by means of an audio watermark.

4. A rendering device (110) as claimed in claim 1, wherein the embedding means (113) are adapted to obtain the audio signal (120) from an audio portion of the content item.

5. A rendering device (110) as claimed in claim 1, wherein the embedding means (113) are adapted to obtain the audio signal (120) from a storage medium (118).

6. A rendering device (110) as claimed in claim 1, wherein the embedding means (113) are adapted to be activated in response to a user action.

7. An arrangement (100) for distributing a content item, comprising a rendering device (110) as claimed in any of the claims 1 to 6 and a content provider (201) arranged for embedding extra information in a video portion of the content item and for making the content item with said embedded extra information available for reception by said rendering device (110).

8. A computer program product (140) comprising means adapted for causing a processor to execute the steps of receiving a content item comprising at least a video portion, in which portion the extra information is embedded, decoding the extra information from the video portion, embedding the extra information in an audio signal (120), and rendering the audio signal (120).

## Patentansprüche

1. Renderungsanordnung (110) mit Empfangsmitteln (111) zum Empfangen eines Inhaltsitems mit wenigstens einem Videoteil, wobei in diesen Teil zusätzliche Information eingebettet ist, mit Decodermitteln (112) zum Decodieren der zusätzlichen Information aus dem Videoteil, mit Einbettungsmitteln (113) zum Einbetten der zusätzlichen Information in ein Audiosignal (120), und mit Renderungsmitteln (114) zum Rendern des Audiosignals (120).

2. Renderungsanordnung (110) nach Anspruch 1, wobei die Decodermittel (112) dazu vorgesehen sind, ein Videowasserzeichen zu decodieren, das verwendet worden ist zum Einbetten der zusätzlichen Information in den Videoteil.

3. Renderungsanordnung (110) nach Anspruch 1, wobei die eingebetteten Mittel (113) dazu vorgesehen sind, die zusätzliche Information in das Audiosignal (120) einzubetten, und zwar mit Hilfe eines Audiowasserzeichens.

4. Renderungsanordnung (110) nach Anspruch 1, wobei die Einbettungsmittel (113) dazu vorgesehen sind, das Audiosignal (120) aus einem Audioteil des Inhaltsitems zu erhalten.

5. Renderungsanordnung (110) nach Anspruch 1, wobei die Einbettungsmittel (113) dazu vorgesehen sind, das Audiosignal (120) aus einem Speichermedium (118) zu erhalten.

6. Renderungsanordnung (110) nach Anspruch 1, wobei die Einbettungsmittel (113) dazu vorgesehen sind, in Reaktion auf eine Aktion des Benutzers aktiviert zu werden.

7. Anordnung (100) zum Verteilen eines Inhaltsitems mit einer Renderungsanordnung (110) nach einem der Ansprüche 1 bis 6 und mit einem Inhaltprovider (201) zum Einbetten zusätzlicher Information in einen Videoteil des Inhaltsitems und zum Machen des Inhaltsitems mit der genannten eingebetteten zusätzlichen Information, die zum Empfang durch die genannte Renderungsanordnung (110) verfügbar ist.

8. Computerprogrammprodukt (140) mit Mitteln um dafür zu sorgen, dass ein Prozessor die folgenden Schritte durchführt: das Empfangen eines Inhaltsitems mit wenigstens einem Videoteil, wobei in diesen Teil die zusätzliche Information eingebettet ist, das Decodieren der zusätzlichen Information aus dem Videoteil, das Einbetten der zusätzlichen Information in ein Audiosignal (120) und das Rendem des Audiosignals (120).

## Revendications

1. Dispositif de rendu (110) comprenant des moyens de réception (111) pour recevoir un article de contenu comprenant au moins une partie vidéo, dans laquelle partie des informations supplémentaires sont noyées, des moyens de décodage (112) pour décoder les informations supplémentaires d'une partie vidéo, des moyens d'inclusion (113) pour noyer les informations supplémentaires dans un signal audio (120) et des moyens de rendu (114) pour rendre le signal audio (120).

2. Dispositif de rendu (110) selon la revendication 1, dans lequel les moyens de décodage (112) sont à même de décoder un marquage numérique vidéo utilisé pour noyer les informations supplémentaires dans la partie vidéo.

3. Dispositif de rendu (110) selon la revendication 1, dans lequel les moyens d'inclusion (113) sont à même de noyer les informations supplémentaires dans le signal audio (120) au moyen d'un marquage numérique audio.

4. Dispositif de rendu (110) selon la revendication 1, dans lequel les moyens d'inclusion (113) sont à même de tirer le signal audio (120) d'une partie audio de l'article de contenu.

5. Dispositif de rendu (110) selon la revendication 1, dans lequel les moyens d'inclusion (113) sont à même de tirer le signal audio (120) d'un support de stockage (118).

6. Dispositif de rendu (110) selon la revendication 1, dans lequel les moyens d'inclusion (113) sont à même d'être activés en réponse à une action de l'utilisateur.

7. Aménagement (100) pour distribuer un article de contenu, comprenant un dispositif de rendu (110) selon l'une quelconque des revendications 1 à 6 et un fournisseur de contenus (201) aménagé pour noyer des informations supplémentaires dans une partie vidéo de l'article de contenu et pour rendre l'article de contenu avec lesdites informations supplémentaires disponibles pour une réception par ledit dispositif de rendu (110).

8. Produit de programme informatique (140) comprenant des moyens qui sont à même d'amener un processeur à exécuter les étapes de réception d'un article de contenu comprenant au moins une partie vidéo, dans laquelle partie les informations supplémentaires sont noyées, de décodage des informations supplémentaires de la partie vidéo, d'inclusion des informations supplémentaires dans un signal audio (120) et de rendu du signal audio (120).
